(19) Europäisches Patentamt / European Patent Office / Office européen des brevets

(11) **EP 2 740 245 B1**

(12) **EUROPEAN PATENT SPECIFICATION**

(45) Date of publication and mention
of the grant of the patent:
**03.02.2016 Bulletin 2016/05**

(21) Application number: **12751673.0**

(22) Date of filing: **14.08.2012**

(51) Int Cl.:
**H04L 12/70** *(2013.01)*

(86) International application number:
**PCT/US2012/050773**

(87) International publication number:
**WO 2013/025703 (21.02.2013 Gazette 2013/08)**

(54) **A SCALABLE PACKET SCHEDULING POLICY FOR VAST NUMBER OF SESSIONS**

SKALIERBARE PAKETPLANUNGSRICHTLINIE FÜR EINE SEHR GROSSE ANZAHL VON SITZUNGEN

POLITIQUE DE PROGRAMMATION DE PAQUET POUVANT ÊTRE MIS À L'ÉCHELLE POUR UN GRAND NOMBRE DE SESSIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.08.2011 US 201113210576**

(43) Date of publication of application:
**11.06.2014 Bulletin 2014/24**

(73) Proprietor: **Huawei Technologies Co., Ltd.
Longgang District
Shenzhen, Guangdong 518129 (CN)**

(72) Inventors:
• **LIU, Deming
Guangdong 518129 (CN)**
• **YI, Ken
Fremont, California 94539 (US)**
• **LIU, Pinzhong
Fremont, California 94539 (US)**

(74) Representative: **Pfenning, Meinig & Partner mbB
Patent- und Rechtsanwälte
Theresienhöhe 11a
80339 München (DE)**

(56) References cited:
**US-A1- 2005 220 114     US-B1- 6 389 031**

• **CHEUNG S Y ET AL: "BSFQ: bin sort fair queueing", PROCEEDINGS IEEE INFOCOM 2002. THE CONFERENCE ON COMPUTER COMMUNICATIONS. 21ST. ANNUAL JOINT CONFERENCE OF THE IEEE COMPUTER AND COMMUNICATIONS SOCIETIES. NEW YORK, NY, JUNE 23 - 27, 2002; [PROCEEDINGS IEEE INFOCOM. THE CONFERENCE ON COMPUTER COMMUNI, vol. 3, 23 June 2002 (2002-06-23), pages 1640-1649, XP010593732, DOI: 10.1109/INFCOM.2002.1019417 ISBN: 978-0-7803-7476-8**
• **OLESINSKI W ET AL: "Considerations for scheduling and servicing events using a calendar structure", COMPUTER COMMUNICATIONS AND NETWORKS, 2002. PROCEEDINGS. ELEVENTH INTE RNATIONAL CONFERENCE ON 14-16 OCT. 2002, PISCATAWAY, NJ, USA,IEEE, 14 October 2002 (2002-10-14), pages 30-33, XP010610854, ISBN: 978-0-7803-7553-6**
• **BAHR H A ET AL: "SMART PRIORITY QUEUE ALGORITHMS FOR SELF-OPTIMIZING EVENT STORAGE", SIMULATION MODELLING PRACTICE AND THEORY, ELSEVIER, AMSTERDAM, NL, vol. 12, no. 1, 1 April 2004 (2004-04-01), pages 15-40, XP009062998, ISSN: 1569-190X, DOI: 10.1016/J.SIMPAT.2004.01.002**

## Description

## BACKGROUND

Modem communications and data networks are comprised of nodes that transport data through the network. The nodes may include routers, switches, bridges, or combinations thereof that transport the individual data packets or frames through the network. A node can forward a plurality of packets that correspond to different sessions or flows in parallel. The packets of the different sessions or flows can be received over a plurality of ingress ports and forwarded over a plurality of egress ports of the node. Additionally, the packets of the different flows can be queued or buffered in corresponding queues or buffers for some time before sending the packets from the node. The packets in the different queues can be forwarded over the same egress link and as such share the bandwidth available or assigned to that link. A scheduler at the node is typically used to schedule and coordinate the forwarding of the buffered packets in the different queues on the same egress link, such as by selecting packets form the different queues at different time slots designated by the scheduler.

Paper titled "BSFQ: bin sort fair queueing" Proceedings IEEE INFOCOM 2002, (Cheung S Y et al), discloses a new Bin Sort Fair Queueing (BSFQ) packet schedule method that is a frame-based method and uses priority assignments in sorted-priority schemes to determine the packets that are transmitted in each round. In BSFQ, the virtual time is divided into slices of equal length called bins. As in sorted-priority schemes, each arriving packet is <u>stamped with a priority value which represents its virtual departure time</u>. The packet is then stored in the bin that corresponds to the time slice containing <u>the virtual departure time of that packet,</u> and packets are sorted into the bins based on their <u>assigned virtual time stamps</u> and within one bin, packet are transmitted in the FIFO manner.

US patent application (US 2005/0220114 A1) discloses a method and apparatus for scheduling packets using a pre-sort scheduling array having one or more smoothing registers. The scheduling array includes a number of round buffers, each round buffer having an associated smoothing register. To schedule a packet for transmission, the packet's transmission round and relative position within that round are determined, and an identifier for the packet is placed at the appropriate position within the scheduling array. A bit of the associated smoothing register is set, the set bit corresponding to the entry receiving the packet identifier. During transmission, the set bits of the smoothing register associated with a current round buffer are read to identify packets that are to be dequeued.

## SUMMARY

In one embodiment, the disclosure includes an apparatus comprising a plurality of queues configured to cache a plurality of packets that correspond to a plurality of sessions, a scheduler configured to schedule the packets from the different queues for forwarding based on a finish time for each packet at the egress of each corresponding queue, and an egress link coupled to the scheduler and configured to forward the scheduled packets from all the queues at a total bandwidth that is shared among the queues, wherein the calculation of the finish time is dynamically based on the amount of bandwidth allocated for the corresponding queue, wherein the calculation of the finish time is only for the packets at the head of the queues, and wherein only the packets at the head of the queues are scheduled, and wherein the queues have assigned corresponding weights for sharing the total bandwidth.

In another embodiment, the disclosure includes a network component comprising a receiver configured to receive a plurality of packets that correspond to a plurality of sessions, one or more memory units for storing a plurality of queues configured to buffer the packets of the corresponding sessions, a logic unit configured to calculate a finish time for each detected packet at the head of a corresponding queue and assign the detected packet to a time slot of a calendar queue for forwarding the packet in ascending order of finish time, and a transmitter configured to send a plurality of packets assigned to the time slots in the order of time slots over an output link. In yet another embodiment, the disclosure includes a network apparatus implemented method comprising scanning a plurality of queues for a plurality of packet sessions to detect any backlogged packets in the queues, wherein the queues are assigned corresponding weights for sharing the total bandwidth, assigning to a plurality of time slots in a calendar table a plurality of packets detected at the head of the queues in ascending order of a plurality of finish times calculated for the packets in terms of the amount of bandwidth allocated for the packet sessions, scanning the time slots in the calendar table in sequence to detect the assigned packets, and forwarding the detected assigned packets in order on a shared egress link.

These and other features will be more clearly understood from the following detailed description taken in conjunction with the accompanying drawings and claims.

## BRIEF DESCRIPTION OF THE DRAWINGS

For a more complete understanding of this disclosure, reference is now made to the following brief description, taken in connection with the accompanying drawings and detailed description, wherein like reference numerals represent like parts.

FIG. 1 is a schematic diagram of an embodiment of a scheduler architecture.
FIG. 2 is a schematic diagram of an embodiment of a typical calendar queue.

FIG. 3 is a schematic diagram of another embodiment of a calendar queue with poor scalability.

FIG. 4 is a schematic diagram of another embodiment of a calendar queue with improved scalability.

FIG. 5 is a schematic diagram of an embodiment of a multi-level scheduler hierarchy.

FIG. 6 is a schematic diagram of an embodiment of a multi-level scheduling scheme.

FIG. 7 is a chart of an embodiment of a packet scheduling workload.

FIG. 8 is a chart of an embodiment of scheduling fairness.

FIG. 9 is a chart of an embodiment of a number of slots scanned for sending a packet.

FIG. 10 is a flowchart of an embodiment of a packet scheduling and forwarding method.

FIG. 11 is a schematic diagram of an embodiment of a network unit.

FIG. 12 is a schematic diagram of an embodiment of a general-purpose computer system.

## DETAILED DESCRIPTION

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Disclosed herein is a system and method for improved packet scheduling and forwarding, e.g., at a network node. A scheduler may be configured to efficiently schedule the forwarding of a plurality of packets that correspond to a plurality of sessions and that are buffered in a plurality of corresponding queues at the network node. A packet scheduling policy or algorithm may be implemented to address the scalability issue of skipping idle queues, for instance when a substantial number of sessions are handled and where a substantial portion of the sessions are idle. The packet scheduling policy or algorithm may be used to skip a bounded number of idle queues for servicing or forwarding a packet in the queues. The algorithm may have an O(1) time complexity for all or a plurality of packet arrangements or conditions. The algorithm may also have fairness property for handling the packets of different sessions similar to other used algorithms, e.g., the Weighted Fair Queuing (WFQ) algorithm. The policy or algorithm may be effectively implemented using software only, using software with limited hardware support, or using hardware.

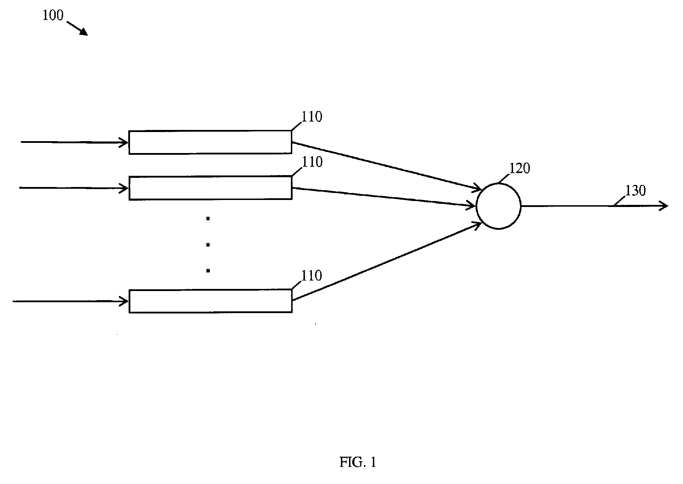

FIG. 1 illustrates an embodiment of a scheduler architecture 100, which may be used to schedule packets of different sessions or flows for forwarding. The scheduler architecture 100 may be implemented in a network component or node, such as a router, bridge, switch, or other components configured to forward packets or frames in a network. The packets may belong to different sessions or flows that may be received or generated at the network component. The scheduler architecture 100 may comprise a plurality of queues or buffers 110, a scheduling unit or scheduler 120 coupled to all the queues 110, and an output or egress link 130 coupled to the scheduler 120. The queues or buffers 110 may be configured to cache or temporary store incoming or generated packets until the packets may be sent, by the scheduler 120, to the egress link 130 for transmission. The scheduler 120 may select the packets from the different queues to send via the same shared egress link 130 according to some order based on a scheduling algorithm, which may guarantee fairness in selecting the packets as described below. The egress link 130 may be used to forward or transmit all the packets of the different sessions and may have a fixed and assigned bandwidth that may be shared among all the sessions.

Typically, the scheduling algorithm may guarantee fairness in allocating portions of the total bandwidth of the egress link 130, such the WFQ scheduling algorithm. Based on the WFQ, n sessions (n is an integer) may share one output link with a bandwidth R, such that each session i has a weight $w_i$. Each session may have a guaranteed rate $r_i = \dfrac{w_i}{W} R$, where $W = \sum\limits_{j=1}^{n} w_j$.

The WFQ may mimic a fluid model of Generalized Processing Sharing (GPS) and define a virtual time, where V(t) = 0 if no packet backlog exists in a session.

Otherwise, $V(t) = V(t_0) + \dfrac{W}{\sum\limits_{i \in B(t_0,t)} w_i} (t - t_0)$, where

$B(t_0,t)$ is the set of backlogged sessions at $[t_0,t]$. The WFQ may also define a virtual start time $S_i^k = \max\{F_i^{k-1}, V(a_i^k)\}$

and a corresponding virtual finish time $F_i^k = S_i^k + \dfrac{L_i^k}{r_i}$

for the k-th packet on session i, where $a_i^k$ is the arrival time of the k-th packet on session i, and where $L_i^k$ is the length of the k-th packet on session i. The virtual finish time is determined when queuing a packet, e.g., when adding the packet to the queue. The packets in the queues are serviced in ascending order of the virtual finish time for backlogged packets. Different schemes may also be used to reduce the complexity of the WFQ, such as using a calendar queue or using a Self Clocked Fair Queuing (SCFQ). The SCFQ may reduce the virtual time overhead of the WFQ and use the virtual finish time of the packet being transferred as the current virtual time.

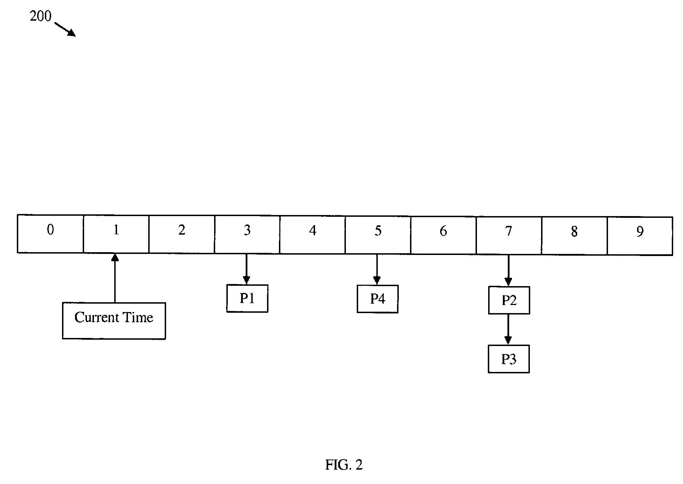

FIG. 2 is an embodiment of a typical calendar queue 200, which may be used to reduce computation complexity of the WFQ scheduling algorithm. The calendar queue may also be referred to as a calendar table. The calendar queue 200 may comprise a plurality of time slots that correspond to a plurality of sessions or queues. The time slots may be traversed in sequence to forward corresponding assigned packets at each time slot. The time slots may be processed in a recursive manner by restarting at the first time slot (time slot 0) after processing the last time slot (time slot 9). Although ten time slots (from 0 to 9) are shown in FIG. 2, the calendar queue 200 may comprise a substantially large number of time slots, e.g. up to about 1,000,000 time slots or more. The time slots may be assigned backlogged packets that are ordered using WFQ, which may then be forwarded according to their sequence of assigned time slots.

Each time slot may be assigned one or more backlogged packets (e.g., P1, P2, P3, P4, etc.) using WFQ. A backlogged packet may be scheduled to be serviced (or forwarded) at an entry or time slot of the calendar queue 200 that is determined by a corresponding quantized finish time. The calendar queue 200 may be traversed repeatedly, where packets assigned to time slots may be serviced if found. At each current time, one of the time slots may be scanned for an assigned packet. If a packet is found, then the packet may be transmitted from its corresponding queue on the shared output link before moving to the next time slot in the calendar queue 200. Otherwise, the next time slot may be scanned for an assigned packet. This process may be repeated in a loop sequence, where all the time slots in the calendar queue 200 may be traversed in order multiple times. Using the calendar queue 200 may reduce on-the-fly (e.g., real-time) computational complexity of WFQ. However, the calendar queue 200 may be substantially sparse, e.g., comprise a substantially large number of unassigned or empty time slots for empty queues, which may still be scanned to arrive at an assigned time slot. This may cause poor scalability and reduce the overall performance.

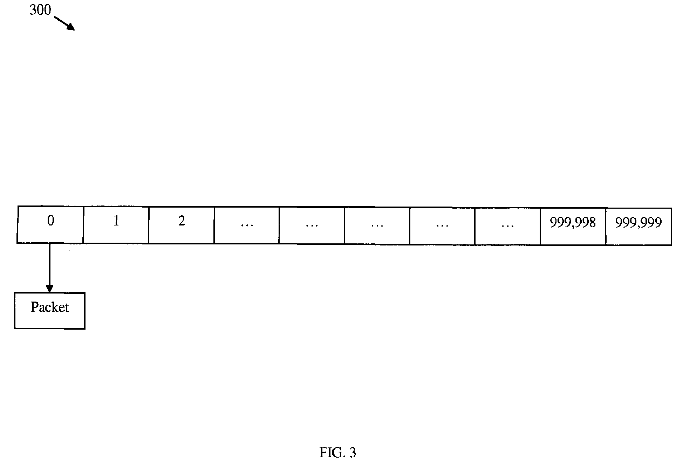

FIG. 3 illustrates an embodiment of another calendar queue 300 with poor scalability. The calendar queue 300 may comprise about 1,000,000 time slots (from 0 to 999,999), where only the first time slot (time slot 0) may be assigned a packet. The unassigned time slots may correspond to empty queues that do not comprise backlogged packets. This may be the case when not all the sessions or flows are active all the time and hence some of the queues may be empty. Traversing this substantially large number of unassigned or empty time slots in the calendar queue 300 may have a considerable overhead, e.g., in software implementation. In this case, where only one packet is assigned to one time slot, only about one millionth of the total bandwidth may be used and the remaining bandwidth may be wasted while the remaining empty time slots are being scanned.

To improve the scalability and performance for scheduling and forwarding packets for different sessions, an improved scheduling algorithm is needed that may assign a substantial portion of the time slots in the calendar queue and hence obtain a more dense calendar queue. This may lead to better use of the total bandwidth by scanning substantially assigned time slots in the calendar queue for non-empty queues that comprise backlogged packets.

Specifically, a new virtual arrival time for the k-th packet on session i may be defined as $V_i^k = 0$ if no packet backlog exists at the queues. Otherwise, $V_i^k$ is set equal to a finish time of the packet being serviced. The start time and finish time of a packet may be calculated as late as the packet is moved to the head or egress of its queue instead of the queuing time as in the case of WFQ. The improved algorithm may define a virtual start time $S_i^k = \max\{F_i^{k-1}, V_i^k\}$ and a corresponding virtual finish time

$$F_i^k = S_i^k + \frac{L_i^k}{\frac{w_i}{\sum_{j\in B} w_j} R},$$

where B is the set of all active sessions when the packet is moved to the head of the queue. The remaining parameters are similar to the corresponding parameters described above.

According to the proposed algorithm above, only the packet at the head of its queue is assigned to an entry in the calendar queue or table that is determined by the finish time. Thus, most of the time slots in the calendar queue may be assigned a packet and hence the time slots may be traversed more quickly to find a packet to be serviced. The calendar queue may in some cases still include unassigned time slots for empty queues, but the number of such time slots may be substantially reduced, and thus the performance and scalability for packet scheduling and forwarding may be substantially improved. This may also substantially improve bandwidth utilization, where most or a substantial portion of the shared output link bandwidth may be used for transmitting the packets at the different time slots.

The improved algorithm may provide a work-conserving policy, as described above. The work-conserving policy may correspond to an O(1) work conserving schedule. Further, the packets may be assigned to the time slots of the calendar queue or table without using a physical timer.

The finish time may also be calculated dynamically since the coefficient $\frac{w_i}{\sum_{j\in B} w_j}$ for calculating the finish time may change in terms of the amount of bandwidth allocated for a session instead of using a fixed value as in WFQ. The dynamic change in the coefficient may reflect the change of sessions switching between active (comprising backlogged packets) and idle (comprising no backlogged packets). This may lead to a denser calendar table regardless of the number of sessions that are considered. In average or general, about S time slots may be scanned to service about S packets (S is an integer). The algorithm may also support Quality of Service (QoS) requirements, where different packet session may have different weights or priorities in sharing the egress link bandwidth.

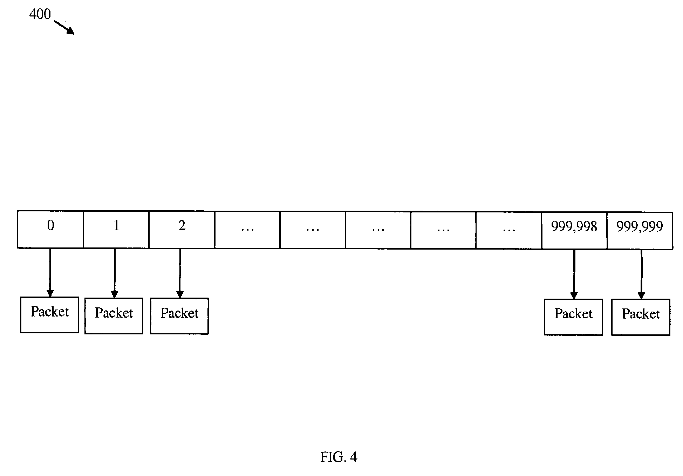

FIG. 4 illustrates an embodiment of another calendar queue 400 with improved scalability, based on the improved algorithm above. The calendar queue 400 may comprise about 1,000,000 time slots (from 0 to 999,999), where most or a substantial number of the time slots may be assigned a packet at the head of a corresponding queue. The calendar queue 400 may comprise no or a negligible number of unassigned time slots that may correspond to empty queues that do not comprise backlogged packets. The calendar queue 400 is substantially denser than the calendar queue 300 obtained using WFQ, and thus may be processed using less computation overhead, e.g., using mostly software. In other implementations, hardware may also be used instead or with software.

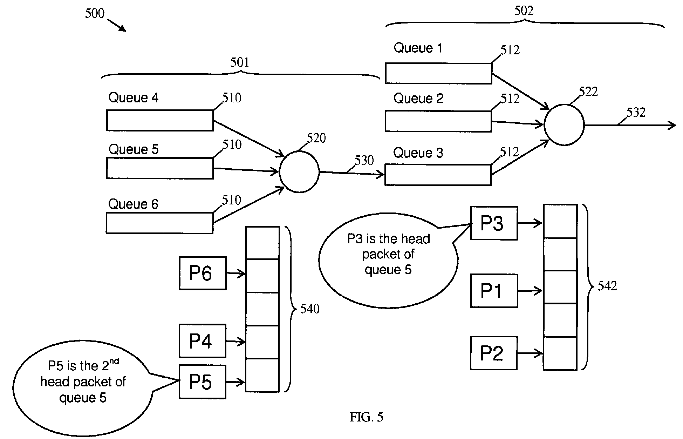

The above algorithm may also be implemented in a multi-level queuing hierarchy, where a queue at one level may be coupled to a plurality of queues at a lower level. As such, the packets from the lower level queues may be scheduled and forwarded to the higher level queue using the improved scheme above. A scheduler at each level may implement the improved scheduling algorithm to forward packets from different queues via a shared output link. FIG. 5 illustrates an embodiment of a multi-level scheduler hierarchy 500, where the improved scheduling scheme may be implemented at each level. The multi-level scheduler hierarchy 500 may be implemented in a network component or node, such as a router, bridge, switch, or other components configured to forward packets or frames in a network. The packets may belong to different sessions or flows that may be received or generated at the network component. Alternatively, the multi-level scheduler hierarchy 500 may be implemented in a plurality of nodes that may be coupled in a multi-level hierarchy, such as in a tree topology. As such, the packets may belong to different sessions or flows that may be forwarded along the nodes at the different levels.

The multi-level scheduler hierarchy 500 may comprise at least two levels of queues and corresponding schedulers, where each level may be based on the scheduler architecture 100. As such, a first level scheduler architecture 501 may comprise a plurality of first level queues or buffers 510 (queues 4, 5, and 6), a first level scheduling unit or scheduler 520 coupled to all the first level queues 510, and a first level output or egress link 530 coupled to the first level scheduler 520. Additionally, a second level scheduler architecture 502 coupled to the first level scheduler architecture 501 may comprise a plurality of second level queues or buffers 512 (queues 1, 2, and 3), a second level scheduling unit or scheduler 522 coupled to all the second level queues 512, and a second level output or egress link 532 coupled to the second level scheduler 522. The second level scheduler architecture 502 may be coupled to the first level scheduler architecture 501 by one of the second level queues 512 (queue 3) that may be coupled to the first level egress link 530. The components of the first level scheduler architecture 501 and similarly the components of the second level scheduler architecture 502 may be configured similar to the corresponding components of the scheduler architecture 100.

Both, the first level scheduler architecture 501 and the second level scheduler architecture 502 may be implemented in the same network node. Alternatively, the first level scheduler architecture 501 may be implemented in a first node in a tree, and the second level scheduler architecture 502 may be implemented in a second node coupled to the first node at a next higher level in the tree. The first level scheduler 520 may implement the improved scheduling algorithm above using a first level calendar queue 540 to schedule and forward packets efficiently from the first level queues 510 (queues 4, 5, and 6) to the second level queue 512 (queue 3) via the first level egress link 530. Similarly, the second level scheduler 522 may implement the improved scheduling algorithm above using a second level calendar queue 542 to schedule and forward packets efficiently from the second level queues 512 (queues 1, 2, and 3) on the second level egress link 532. As such, both the first level calendar queue 540 and the second level calendar queue 542 may be substantially dense, e.g. similar to the calendar queue 400.

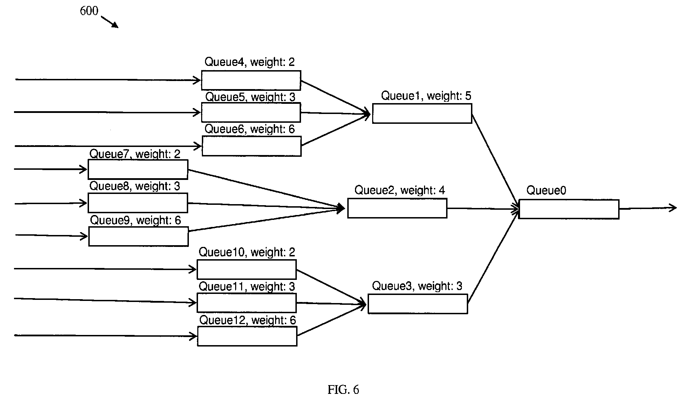

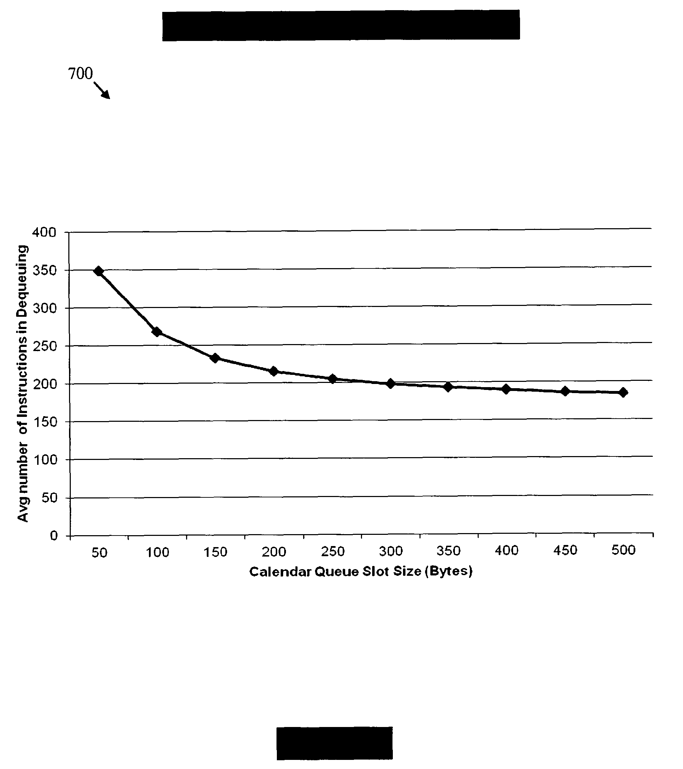

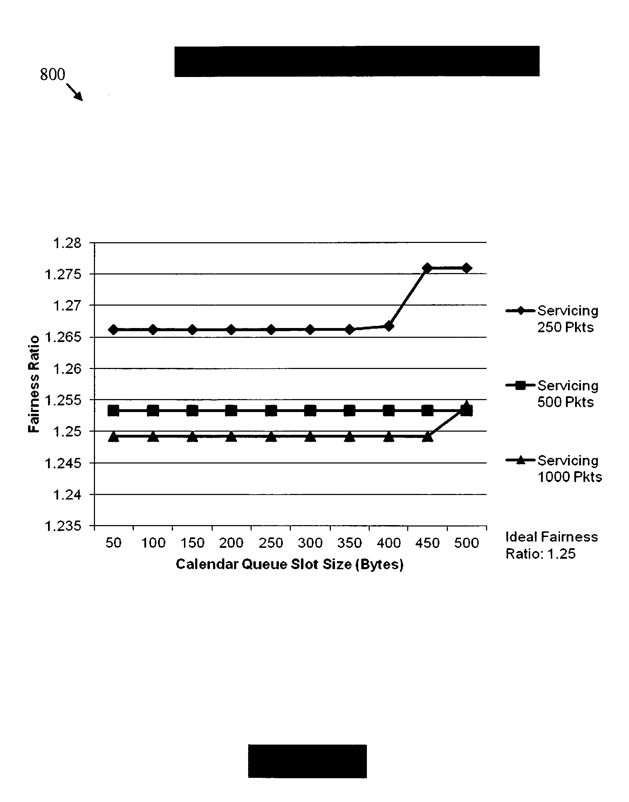

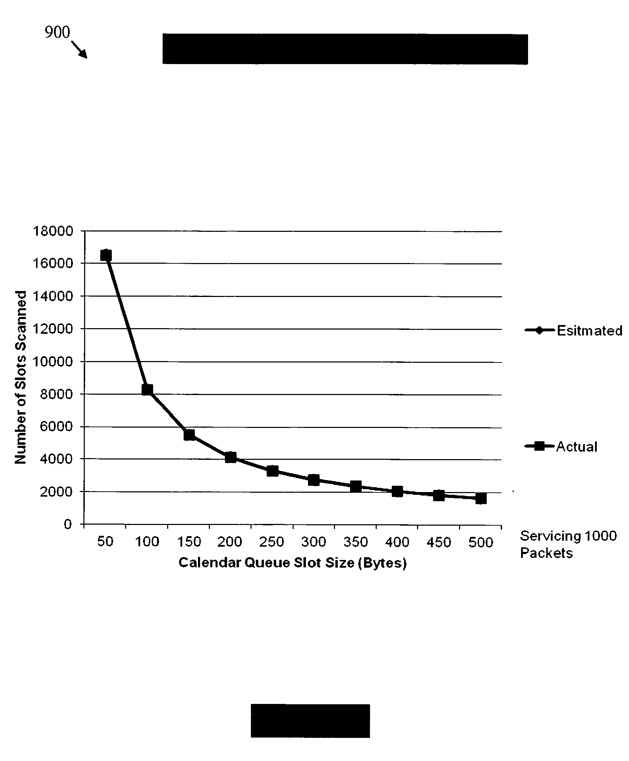

FIG. 6 illustrates an embodiment of a multi-level scheduling scheme 600 for a multi-level scheduler hierarchy. The multi-level scheduler hierarchy may comprise three levels of queues and corresponding schedulers (not shown), where each level may be based on the scheduler architecture 100. The three levels of queues may comprise a first level of queues that includes queues 4 to 12, which have a plurality of corresponding weights ($w_i$) as indicated in FIG. 6. The three levels of queues may also comprise a second level of queues that includes queues 1, 2, and 3, which also have corresponding weights ($w_i$), and a third level queue 0. the first level queues and the second level queues may have corresponding first level and second level schedulers (not shown) that may implement the improved scheduling algorithm above (using corresponding calendar tables) to forward the packets on a shared egress link (e.g., to a higher level queue).

Specifically, the packets of queues 4, 5, and 6 are scheduled and forwarded on a shared link to queue 1, the packets of queues 7, 8, and 9 are scheduled and forwarded on a shared link to queue 2, and the packets of queues 10, 11, and 12 are scheduled and forwarded on a shared link to queue 3. Further, the packets of queues 1, 2, and 3 are scheduled and forwarded to queue 0. The packets at queue zero are then forwarded on the same output link.

FIG. 7 illustrates an embodiment of a packet scheduling workload 700 that corresponds to the multi-level scheduling scheme 600. The packet scheduling workload 700 is represented by a curve for a plurality of calculated average number of instructions in dequeuing packets vs. a plurality of calendar queue slot sizes (in bytes). The instructions for dequeuing the packets (i.e., removing packets form the head or egress of the queues) are implemented using a platform i686 processor. The curve shows that the number of instructions decreases from about 50 bytes time slot size to about 500 bytes slot size. This indicates that the average number of instructions in dequeuing may be dependent on the size of the time slots used in the calendar queue. However, for the same examined slot sizes, the average number of instructions in queuing packets (no curve is shown), or adding packets to the queues, was found fixed at about 32 instructions. This indicates that the average number of instructions in queuing or enqueuing the packets (i.e., add packets to the start or ingress of the queues)may be independent of the size of the time slots in the calendar queue.

FIG. 8 illustrates an embodiment of the scheduling fairness 800 of the multi-level scheduling scheme 600. The scheduling fairness 800 is represented by curves for a plurality of calculated fairness ratio values vs. the calendar queue slot sizes (in bytes) used above. Specifically, the fairness ratio is calculated for queue 1 to queue 2 in the multi-level scheduling scheme 600. Ideally, the fairness ratio should be equal to the ratio of the weight of queue 1 to the weight of queue 2, which is 5/4 = 1.25. Two curves are shown for two cases for servicing 250 packets and servicing 500 packets in the calendar tables for queues 1 and 2. The curves show that the fairness ratio for the greater number of serviced packets is closer to the ideal fairness ratio. The fairness ratio values are also found about equal across the different slot sizes for the case of servicing 500 packets. The fairness for the case of servicing 1,000 packets (not shown) was also calculated over the same range of examined slot size values and was found substantially equal to the ideal fairness ratio of 1.25. This indicates that as the number of packets increases, the improved scheduling algorithm has a fairness ratio closer to the ideal or required fairness ratio between the queues.

FIG. 9 illustrates an embodiment of a number of slots scanned 900 for sending a packet in the multi-level scheduling scheme 600. The number of slots scanned 900 is represented by two curves for the numbers of slots scanned vs. the calendar queue slot sizes (in bytes) used above. Specifically, the numbers of slots scanned are shown for the case of servicing 1,000 packets in the calendar queue. The two curves correspond to the actual values of the numbers of slots scanned and the corresponding estimated values that are based on theoretical analysis. The two values were found substantially equal, and thus the two curves overlap. The curves indicate that the number of slots scanned decreases as the calendar queue slot size increases, which may allow servicing more packets per time slot. Thus, increasing the slot size may increase the speed of forwarding packets from their queues and improve bandwidth utilization and scalability.

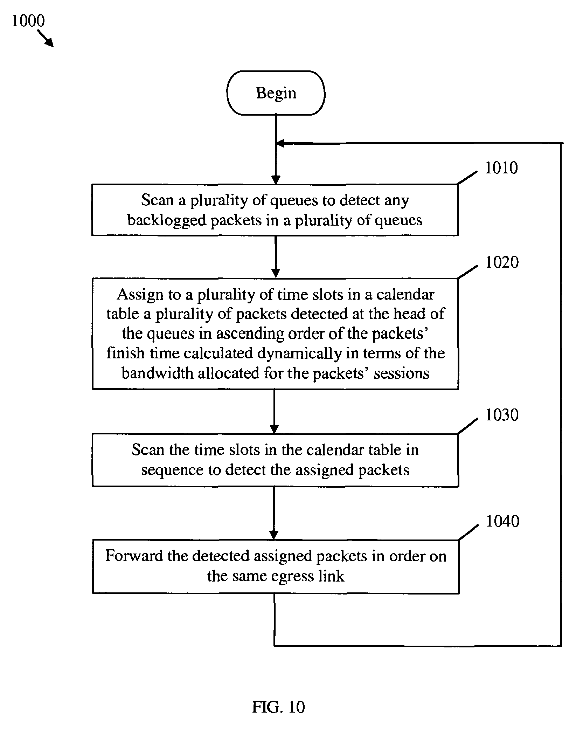

FIG. 10 illustrates an embodiment of a packet scheduling and forwarding method 1000, which may be used for scheduling and forwarding a plurality of packets for multiple sessions in parallel, i.e., by sharing the same egress link bandwidth. The packet scheduling and forwarding method 1000 may be based on the improved scheduling algorithm above and may be implemented by a network node or by a plurality of network nodes in a multi-level queuing or scheduling scenario. The method may begin at block 1010, where a plurality of queues may be scanned to detect backlogged packets in the queues. At block 1020, a plurality of time slots in a calendar table may be assigned a plurality of packets detected at the head of the queues in ascending order of the packets' finish time calculated dynamically in terms of the bandwidth allocated for the packets' sessions, as described above. At block 1030, the time slots in the calendar queue may be scanned in sequence to detect the assigned packets. At block 1040, the detected assigned packets may be forwarded in order on the same egress link or port. The blocks 1010 to 1040 may be repeated to continue forwarding packets that are received/generated and queued in the network node(s).

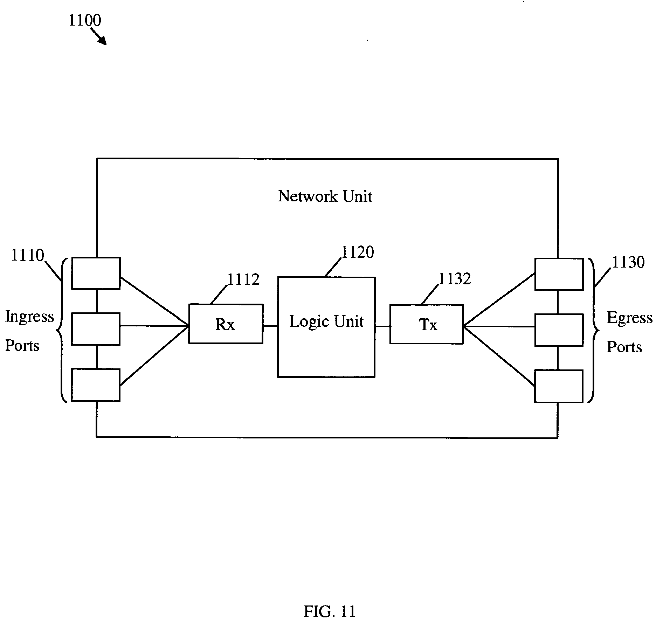

FIG. 11 illustrates an embodiment of a network unit 1100, which may be any device that transports and processes data through a network, e.g., the label switched system 100. For instance, the network unit 1100 may be located in any of the network components described above, e.g., at any one of the RPs, LCs, edge nodes, forwarding nodes, and servers. The network unit 1100 may comprise one or more ingress ports or units 1110 coupled to a receiver (Rx) 1112 for receiving packets, objects, or Type-Length-Values (TLVs) from other network components. The network unit 1100 may comprise a logic unit 1120 to determine which network components to send the packets to. The logic unit 1120 may also implement or support the dynamic configuration and forwarding method 1200, and the service reachability forwarding scheme 900 and/or 1000. The logic unit 1120 may be implemented using hardware, software, or both. The network unit 1100 may also comprise one or more egress ports or units 1130 coupled to a transmitter (Tx) 1132 for transmitting packets or data to the other network components. The components of the network unit 1100 may be arranged as shown in FIG. 11.

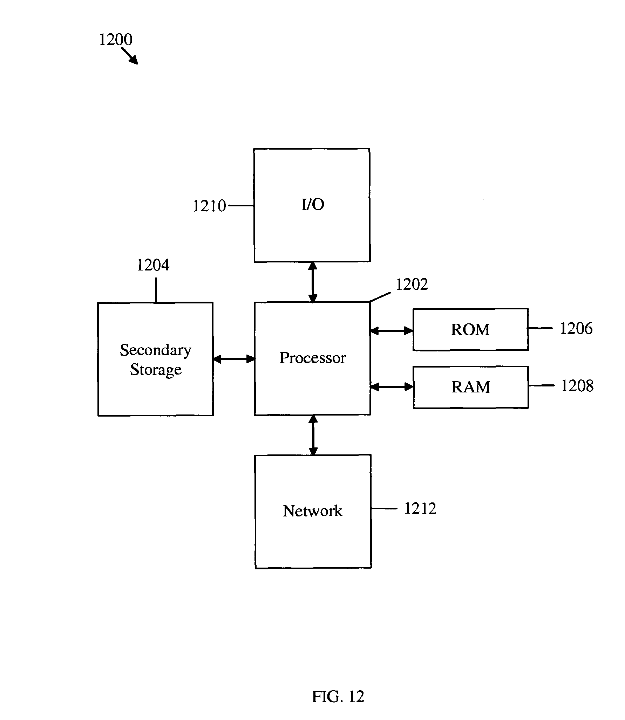

The network components described above may be implemented on any general-purpose network component, such as a computer or network component with sufficient processing power, memory resources, and network throughput capability to handle the necessary workload placed upon it. FIG. 12 illustrates a typical, general-purpose network component 1200 suitable for implementing one or more embodiments of the components disclosed herein. The network component 1200 includes a processor 1202 (which may be referred to as a central processor unit or CPU) that is in communication with memory devices including secondary storage 1204, read only memory (ROM) 1206, random access memory (RAM) 1208, input/output (I/O) devices 1210, and network connectivity devices 1212. The processor 1202 may be implemented as one or more CPU chips, or may be part of one or more application specific integrated circuits (ASICs).

The secondary storage 1204 is typically comprised of one or more disk drives or tape drives and is used for non-volatile storage of data and as an over-flow data storage device if RAM 1208 is not large enough to hold all working data. Secondary storage 1204 may be used to store programs that are loaded into RAM 1208 when such programs are selected for execution. The ROM 1206 is used to store instructions and perhaps data that are read during program execution. ROM 1206 is a non-volatile memory device that typically has a small memory capacity relative to the larger memory capacity of secondary storage 1204. The RAM 1208 is used to store volatile data and perhaps to store instructions. Access to both ROM 1206 and RAM 1208 is typically faster than to secondary storage 1204.

At least one embodiment is disclosed and variations, combinations, and/or modifications of the embodiment(s) and/or features of the embodiment(s) made by a person having ordinary skill in the art are within the scope of the disclosure. Alternative embodiments that result from combining, integrating, and/or omitting features of the embodiment(s) are also within the scope of the disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, $R_l$, and an upper limit, $R_u$, is disclosed, any number falling within the range is specifically disclosed. In particular, the following numbers within the range are specifically disclosed: $R = R_l + k * (R_u - R_l)$, wherein k is a variable ranging from 1 percent to 100 percent with a 1 percent increment, i.e., k is 1 percent, 2 percent, 3 percent, 4 percent, 7 percent, ..., 70 percent, 71 percent, 72 percent, ..., 97 percent, 96 percent, 97 percent, 98 percent, 99 percent, or 100 percent. Moreover, any numerical range defined by two R numbers as defined in the above is also specifically disclosed. Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Accordingly, the scope of protection is not limited by the description set out above but is defined by the claims that follow, that scope including all equivalents of the subject matter of the claims. Each and every claim is incorporated as further disclosure into the specification and the claims are embodiment(s) of the present disclosure. The discussion of a reference in the disclosure is not an admission that it is prior art, especially any reference that has a publication date after the priority date of this application. The disclosure of all patents, patent applications, and publications cited in the disclosure are hereby incorporated by reference, to the extent that they provide exemplary, procedural, or other details supplementary to the disclosure.

While several embodiments have been provided in the present disclosure, it should be understood that the disclosed systems and methods might be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope disclosed herein.

**Claims**

1. An apparatus comprising:

   a plurality of queues (110, 510) configured to cache a plurality of packets that correspond to a plurality of sessions;
   wherein the apparatus further comprises:

      a scheduler (120, 520) configured to schedule the packets from the different queues for forwarding based on a finish time for each packet at the egress of each corresponding queue, and
      an egress link (130, 530) coupled to the scheduler and configured to forward the scheduled packets from all the queues at a total bandwidth that is shared among the queues,

   wherein the calculation of the finish time is dynamic based on the amount of bandwidth allocated for the corresponding queue,
wherein the calculation of the finish time is only for the packets at the head of the queues, and wherein only the packets at the head of the queues are scheduled, and
wherein the queues have assigned corresponding weights for sharing the total bandwidth.

2. The apparatus of claim 1,
wherein the calculation of the finish time is dynamical to reflect change of sessions switching between active and idle.

3. The apparatus of claim 1, wherein the weights assigned to the queues are based on Quality of Service ,QoS, requirements of the corresponding sessions.

4. The apparatus of claim 1 further comprising:

   a plurality of second queues (512) configured to cache a plurality of packets that correspond to a plurality of sessions including one second queue coupled to the egress link,
   a second scheduler (522) configured to schedule the packets from the different second queues for forwarding based on a finish time for each packet at the egress of each corresponding second queue, and
   a second egress link (532) coupled to the second scheduler and configured to forward the scheduled packets from all the second queues at a total bandwidth that is shared among the queues.

5. The apparatus of claim 4, wherein queues (110, 510), the scheduler (120, 520), the egress link (130, 530), the second queues (512), the second scheduler (522), and the second egress link (532) correspond to the same network node.

6. The apparatus of claim 4, wherein queues (110, 510), the scheduler (120, 520), and the egress link (130, 530) correspond to a first network node, and wherein the second queues (512), the second scheduler (522), and the second egress link (532) correspond to a second network node that is coupled at a higher level to the first network node in a tree.

7. The apparatus of claim 1, wherein the scheduled packets are assigned to a plurality of corresponding time slots in a calendar table, wherein the assigned packets are forwarded on the egress link in the order of the time slots, and wherein the calendar table is substantially dense and comprises substantially less unassigned time slots than assigned time slots.

8. The apparatus of claim 1, wherein the calculation of the the finish time uses the equation

$$F_i^k = S_i^k + \frac{L_i^k}{\dfrac{w_i}{\displaystyle\sum_{j \in B} w_j} R} \text{ for a } k\text{-th packet of session}$$

$i$, where $S_i^k = \max\{F_i^{k-1}, V_i^k\}$ is a calculated start time for the $k$-th packet, $V_i^k = 0$ if no packet backlog exists at the $i$-th queue or otherwise $V_i^k$ is set equal to a finish time of the last packet being serviced at the $i$-th queue, $w_i$ is the weight of the session $i$ in terms of allocated bandwidth, $B$ is the set of all active sessions when the $k$-th packet is moved to the head of the queue, R is a total bandwidth of the output link that is shared among the sessions, and $L_i^k$ is a length of the $k$-th packet on session $i$.

9. A network apparatus implemented method comprising:

   scanning a plurality of queues for a plurality of packet sessions to detect any backlogged packets in the queues; wherein the queues are assigned corresponding weights for sharing the total bandwidth;
   assigning to a plurality of time slots in a calendar table a plurality of packets detected at the head of the queues in ascending order of a plurality of finish times calculated dynamically for the packets in terms of the amount of bandwidth allocated for the packet sessions; scanning the time slots in the calendar table in sequence to detect the assigned packets; and
   forwarding the detected assigned packets in order on a shared egress link.

10. The network apparatus implemented method of claim 9, wherein the queues are scanned continuously to detect any new backlogged packets in the queues, and wherein the time slots are scanned recursively by restarting at a first time slot after scanning a last time slot.

11. The network apparatus implemented method of claim 9, wherein only the packets detected at the output of the queues are assigned to the time slots in ascending order according to their calculated finish times.

**Patentansprüche**

1. Vorrichtung, die Folgendes aufweist:

eine Vielzahl von Warteschlangen (110, 510), die konfiguriert sind, eine Vielzahl von Paketen zwischenzuspeichern, die einer Vielzahl von Sitzungen entsprechen;

wobei die Vorrichtung ferner aufweist:

eine Zeitplanungsvorrichtung (120, 520), die konfiguriert ist, die Pakete aus den unterschiedlichen Warteschlangen zur Weiterleitung beruhend auf einer Abschlusszeit für jedes Paket am Ausgang jeder entsprechenden Warteschlange einzuplanen, und eine Ausgangsverbindung (130, 530), die mit der Zeitplanungsvorrichtung gekoppelt und konfiguriert ist, die geplanten Pakete aus allen Warteschlangen mit einer Gesamtbandbreite weiterzuleiten, die von den Warteschlangen gemeinsam genutzt wird,

wobei die Berechnung der Abschlusszeit dynamisch auf dem Betrag der Bandbreite beruht, die für die entsprechende Warteschlange zugewiesen ist,

wobei die Berechnung der Abschlusszeit nur für die Pakete am Kopf der Warteschlangen vorgenommen wird, und wobei nur die Pakete am Kopf der Warteschlangen eingeplant werden, und

wobei den Warteschlangen entsprechende Gewichte zur gemeinsamen Nutzung der Gesamtbandbreite zugeteilt sind.

2. Vorrichtung nach Anspruch 1, wobei die Berechnung der Abschlusszeit dynamisch erfolgt, um eine Änderung von Sitzungen widerzuspiegeln, die zwischen aktiv und ungenutzt umschalten.

3. Vorrichtung nach Anspruch 1, wobei die den Warteschlangen zugeteilten Gewichte auf "Quality of Service" (QoS)-Anforderungen der entsprechenden Sitzungen beruhen.

4. Vorrichtung nach Anspruch 1, die ferner aufweist:

eine Vielzahl von zweiten Warteschlangen (512), die konfiguriert sind, eine Vielzahl von Paketen zwischenzuspeichern, die einer Vielzahl von Sitzungen entsprechen, die eine zweite Warteschlange umfasst, die mit der Ausgangsverbindung gekoppelt ist,

eine zweite Zeitplanungsvorrichtung (522), die konfiguriert ist, die Pakete aus den unterschiedlichen zweiten Warteschlangen zur Weiterleitung beruhend auf einer Abschlusszeit für jedes Paket am Ausgang jeder entsprechenden zweiten Warteschlange einzuplanen, und eine zweite Ausgangsverbindung (532), die mit der zweiten Zeitplanungsvorrichtung gekoppelt und konfiguriert ist, die geplanten Pakete aus allen zweiten Warteschlangen mit einer Gesamtbandbreite weiterzuleiten, die von den Warteschlangen gemeinsam genutzt wird.

5. Vorrichtung nach Anspruch 4, wobei Warteschlangen (110, 510), die Zeitplanungsvorrichtung (120, 520), die Ausgangsverbindung (130, 530), die zweiten Warteschlangen (512), die zweite Zeitplanungsvorrichtung (522) und die zweite Ausgangsverbindung (532) demselben Netzwerkknoten entsprechen.

6. Vorrichtung nach Anspruch 4, wobei Warteschlangen (110, 510), die Zeitplanungsvorrichtung (120, 520) und die Ausgangsverbindung (130, 530) einem ersten Netzwerkknoten entsprechen, und wobei die zweiten Warteschlangen (512), die zweite Zeitplanungsvorrichtung (522) und die zweite Ausgangsverbindung (532) einem zweiten Netzwerkknoten entsprechen, der auf einer höheren Ebene mit dem ersten Netzwerkknoten in einem Baum gekoppelt ist.

7. Vorrichtung nach Anspruch 1, wobei die geplanten Pakete einer Vielzahl von entsprechenden Zeitschlitzen in einer Kalendertabelle zugeteilt sind, wobei die zugeteilten Pakete auf der Ausgangsverbindung in der Reihenfolge der Zeitschlitze weitergeleitet werden, und wobei die Kalendertabelle im Wesentlichen dicht ist und im Wesentlichen weniger nicht zugeteilte Zeitschlitze als zugeteilte Zeitschlitze aufweist.

8. Vorrichtung nach Anspruch 1, wobei die Berechnung der Abschlusszeit die Gleichung

$$F_i^k = S_i^k + \frac{L_i^k}{\frac{w_i}{\Sigma_{j \in B} w_j} R}$$ für ein $k$-tes Paket der Sitzung $i$ verwendet, wobei $S_i^k = \max\{F_i^{k-1}, V_i^k\}$ eine berechnete Startzeit für das $k$-te Paket ist, $V_i^k = 0$, wenn kein Paketrückstand an der $i$-ten Warteschlange vorhanden ist oder andernfalls $V_i^k$ gleich einer Abschlusszeit des letzten Pakets gesetzt wird, das an der $i$-ten Warteschlange bedient wird, $w_i$ das Gewicht der Sitzung $i$ bezüglich der zugewiesenen Bandbreite ist, $B$ der Satz aller aktiven Sitzungen ist, wenn das $k$-te Paket zum Kopf der Warteschlange bewegt wird, $R$ eine Gesamtbandbreite an der Ausgangsverbindung ist, die unter den Sitzungen geteilt wird, und $L_i^k$ eine Länge des $k$-ten Pakets auf der Sitzung $i$ ist.

9. In einer Netzwerkvorrichtung implementiertes Verfahren, das die folgenden Schritte aufweist:

Abtasten einer Vielzahl von Warteschlangen für eine Vielzahl von Paketsitzungen, um irgendwelche unerledigten Pakete in den Warteschlangen zu ermitteln; wobei den Warteschlangen entsprechende Gewichte zur gemeinsamen Nutzung der Gesamtbandbreite zugeteilt werden; Zuweisen einer Vielzahl von Zeitschlitzen in einer Kalendertabelle zu einer Vielzahl von Paketen, die am Kopf der Warteschlangen ermittelt werden, in einer aufsteigenden Reihenfolge einer Vielzahl von Abschlusszeiten, die dynamisch für die Pakete bezüglich des Betrags der Bandbreite berechnet werden, die für die Paketsitzungen zugwiesen werden; Abtasten der Zeitschlitze in der Kalendertabelle hintereinander, um die zugeteilten Pakete zu ermitteln; und Weiterleiten der ermittelten zugeteilten Pakete der Reihe nach auf einer gemeinsam genutzten Ausgangsverbindung.

**10.** In einer Netzwerkvorrichtung implementiertes Verfahren nach Anspruch 9, wobei die Warteschlangen kontinuierlich abgetastet werden, um jegliche neuen unerledigten Pakete in den Warteschlangen zu ermitteln, und wobei die Zeitschlitze rekursiv abgetastet werden, indem nach dem Abtasten eines letzten Zeitschlitzes an einem ersten Zeitschlitz erneut begonnen wird.

**11.** In einer Netzwerkvorrichtung implementiertes Verfahren nach Anspruch 9, wobei nur die Pakete, die am Ausgang der Warteschlangen ermittelt werden, den Zeitschlitzen in aufsteigender Reihenfolge gemäß ihren berechneten Abschlusszeiten zugeteilt werden.

**Revendications**

**1.** Appareil, comprenant :

une pluralité de files d'attente (110, 510) configurées pour mettre en cache une pluralité de paquets correspondant à une pluralité de sessions ;
lequel appareil comprend en outre :

un ordonnanceur (120, 520) configuré pour ordonnancer les paquets issus des différentes files d'attente en vue de leur transfert en fonction d'un temps de fin pour chaque paquet à la sortie de chaque file d'attente correspondante, et
une liaison de sortie (130, 530) couplée à l'ordonnanceur et configurée pour transférer les paquets ordonnancés issus de toutes les files d'attente à une largeur de bande totale partagée entre les files d'attente,

dans lequel le calcul du temps de fin est dynamique en fonction de la quantité de largeur de bande allouée pour la file d'attente correspondante,
dans lequel le calcul du temps de fin ne concerne que les paquets en tête des files d'attente, et dans lequel seuls les paquets en tête des files d'attente sont ordonnancés, et
dans lequel les files d'attente possèdent des pondérations correspondantes assignées pour le partage de la largeur de bande totale.

**2.** Appareil selon la revendication 1, dans lequel le calcul du temps de fin est dynamique de façon à refléter un changement de sessions basculant entre actives et inactives.

**3.** Appareil selon la revendication 1, dans lequel les pondérations assignées aux files d'attente sont fonction d'exigences en matière de qualité de service, QoS, des sessions correspondantes.

**4.** Appareil selon la revendication 1, comprenant en outre :

une pluralité de deuxièmes files d'attente (512) configurées pour mettre en cache une pluralité de paquets correspondant à une pluralité de sessions, comportant une deuxième file d'attente couplée à la liaison de sortie ;
un deuxième ordonnanceur (522) configuré pour ordonnancer les paquets issus des différentes deuxièmes files d'attente en vue de leur transfert en fonction d'un temps de fin pour chaque paquet à la sortie de chaque deuxième file d'attente correspondante, et
une deuxième liaison de sortie (532) couplée au deuxième ordonnanceur et configurée pour transférer les paquets ordonnancés issus de toutes les deuxièmes files d'attente à une largeur de bande totale partagée entre les files d'attente.

**5.** Appareil selon la revendication 4, dans lequel les files d'attente (110, 510), l'ordonnanceur (120, 520), la liaison de sortie (130, 530), les deuxièmes files d'attente (512), le deuxième ordonnanceur (522) et la deuxième liaison de sortie (532) correspondent au même noeud de réseau.

**6.** Appareil selon la revendication 4, dans lequel les files d'attente (110, 510), l'ordonnanceur (120, 520) et la liaison de sortie (130, 530) correspondent à un premier noeud de réseau, et dans lequel les deuxièmes files d'attente (512), le deuxième ordonnanceur (522) et la deuxième liaison de sortie (532) correspondent à un deuxième noeud de réseau qui est couplé au premier noeud de réseau à un niveau supérieur dans une arborescence.

**7.** Appareil selon la revendication 1, dans lequel les paquets ordonnancés sont assignés à une pluralité de créneaux temporels correspondants dans une table de calendrier, dans lequel les paquets assignés sont transférés sur la liaison de sortie dans l'ordre des créneaux temporels, et dans lequel la table de calendrier est sensiblement dense et comprend sensiblement moins de créneaux temporels non assignés que de créneaux temporels assignés.

**8.** Appareil selon la revendication 1, dans lequel le calcul du temps de fin fait appel à

$$F_i^k = S_i^k + \frac{L_i^k}{\dfrac{w_i}{\sum_{j \in B} w_j} R}$$ l'équation pour un $k$-ième paquet d'une session $i$, dans laquelle

$$S_i^k = \max\{F_i^{k-1}, V_i^k\}$$ est un temps de début calculé pour le $k$-ième paquet, $V_i^k = 0$ s'il n'y a aucune accumulation de paquets au niveau de la $i$-ième file d'attente et, dans le cas contraire, $V_i^k$ est fixé à un temps de fin du dernier paquet pris en charge au niveau de la $i$-ième file d'attente, $w_i$ est la pondération de la session $i$ en terme de largeur de bande allouée, $B$ est l'ensemble de toutes les sessions actives lorsque le $k$-ième paquet est placé en tête de la file d'attente, $R$ est la largeur de bande totale de la liaison de sortie partagée entre les sessions et $L_i^k$ est une longueur du $k$-ième paquet sur la session $i$.

**9.** Procédé mis en oeuvre dans un appareil de réseau, le procédé comprenant les étapes consistant à :

balayer une pluralité de files d'attente pour une pluralité de sessions en mode paquet dans le but de détecter d'éventuels paquets en accumulation dans les files d'attente ;
lesquelles files d'attente se voient assigner des pondérations correspondantes pour le partage de la largeur de bande totale ;
assigner à une pluralité de créneaux temporels dans une table de calendrier une pluralité de paquets détectés en tête des files d'attente par ordre croissant d'une pluralité de temps de fin calculés dynamiquement pour les paquets en terme de quantité de largeur de bande allouée pour les sessions en mode paquet ; balayer séquentiellement les créneaux temporels dans la table de calendrier dans le but de détecter les paquets assignés ; et
transférer les paquets assignés détectés dans l'ordre sur une liaison de sortie partagée.

**10.** Procédé mis en oeuvre dans un appareil de réseau selon la revendication 9, dans lequel les files d'attente sont balayées de façon continue dans le but de détecter d'éventuels nouveaux paquets en accumulation dans les files d'attente, et dans lequel les créneaux temporels sont balayés de façon récursive en repartant au niveau d'un premier créneau temporel une fois un dernier créneau temporel balayé.

**11.** Procédé mis en oeuvre dans un appareil de réseau selon la revendication 9, dans lequel seuls les paquets détectés à la sortie des files d'attente sont assignés à des créneaux temporels par ordre croissant selon leur temps de fin calculé.

100

110

110

110

120

130

FIG. 1

200

| 0 | 1 | 2 | 3 | 4 | 5 | 6 | 7 | 8 | 9 |
|---|---|---|---|---|---|---|---|---|---|

Current Time

P1

P4

P2

P3

FIG. 2

300

| 0 | 1 | 2 | ... | ... | ... | ... | ... | 999,998 | 999,999 |
|---|---|---|-----|-----|-----|-----|-----|---------|---------|

Packet

FIG. 3

FIG. 5

600

Queue4, weight: 2

Queue5, weight: 3

Queue6, weight: 6

Queue1, weight: 5

Queue7, weight: 2

Queue8, weight: 3

Queue9, weight: 6

Queue2, weight: 4

Queue0

Queue10, weight: 2

Queue11, weight: 3

Queue12, weight: 6

Queue3, weight: 3

FIG. 6

700

800

- Servicing 250 Pkts

- Servicing 500 Pkts

- Servicing 1000 Pkts

Ideal Fairness Ratio: 1.25

**Fairness Ratio** (y-axis: 1.235, 1.24, 1.245, 1.25, 1.255, 1.26, 1.265, 1.27, 1.275, 1.28)

**Calendar Queue Slot Size (Bytes)** (x-axis: 50, 100, 150, 200, 250, 300, 350, 400, 450, 500)

900

Number of Slots Scanned

18000
16000
14000
12000
10000
8000
6000
4000
2000
0

50    100    150    200    250    300    350    400    450    500

Calendar Queue Slot Size (Bytes)

Esitmated

Actual

Servicing 1000
Packets

1000

```
                        ┌──────────────┐
                        │    Begin     │
                        └──────┬───────┘
                               │
                               ▼                          ╱ 1010
        ┌──────────────────────────────────────────────┐
        │      Scan a plurality of queues to detect any │
        │      backlogged packets in a plurality of     │
        │      queues                                    │
        └──────────────────────┬───────────────────────┘
                               │
                               ▼                          ╱ 1020
        ┌──────────────────────────────────────────────┐
        │  Assign to a plurality of time slots in a      │
        │  calendar table a plurality of packets         │
        │  detected at the head of the queues in         │
        │  ascending order of the packets'               │
        │  finish time calculated dynamically in terms   │
        │  of the bandwidth allocated for the packets'   │
        │  sessions                                      │
        └──────────────────────┬───────────────────────┘
                               │
                               ▼                          ╱ 1030
        ┌──────────────────────────────────────────────┐
        │      Scan the time slots in the calendar table │
        │      in sequence to detect the assigned packets│
        └──────────────────────┬───────────────────────┘
                               │
                               ▼                          ╱ 1040
        ┌──────────────────────────────────────────────┐
        │   Forward the detected assigned packets in     │
        │   order on the same egress link                │
        └────────────────────────────────────────────────┘
```

FIG. 10

1100

FIG. 11

1200

1210 — I/O

1204

1202

Secondary
Storage

Processor

ROM — 1206

RAM — 1208

Network — 1212

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050220114 A1


**Non-patent literature cited in the description**

- **CHEUNG S Y.** BSFQ: bin sort fair queueing. *Proceedings IEEE INFOCOM,* 2002